# EUROPEAN PATENT SPECIFICATION

(11) **EP 3 450 871 B1**
(45) Date of publication and mention of the grant of the patent: **07.06.2023**
(21) Application number: 17189042.9
(22) Date of filing: 01.09.2017
(51) Int. Cl.: F24F 13/20, F24F 12/00

(54) **AIR SUPPLY DEVICE**
LUFTZUFUHRVORRICHTUNG
DISPOSITIF D'ADMISSION D'AIR

(43) Date of publication of application: 06.03.2019
(73) Proprietor: Enervent Zehnder Oy, 06150 Porvoo (FI)
(72) Inventor: Tuutti, Jari, 07500 Askola (FI); Lalu, Tero, 06100 Porvoo (FI); Palmgren, Tom, 06200 Porvoo (FI)
(74) Representative: Papula Oy

(56) References cited:
- WO-A1-2013/075722
- WO-A1-2016/028034
- KR-B1- 101 217 605

## Description

### TECHNICAL FIELD

The present invention relates to an air supply device for extracting exhaust air from a room and leading fresh air into the room.

### BACKGROUND

There are previously known numerous air supply devices for extracting exhaust air from a room and leading supply air into the room. The common feature of the known air supply devices is that they comprise a casing having a complex structure comprising layers of metal and insulation. Joint surfaces of the casing structure are sealed by spreading some sealing compound. Because of said sealing compound, the known air supply devices are difficult to dismantle for example if there is need to replace some part inside the device. Usually some part gets damaged while dismantling the device.

One example of a previously known supply air device is disclosed in WO 2013075722 A.

### OBJECTIVE

Objective of the present invention is to provide an air supply device which is possible to dismantle without damaging any parts of it.

### SUMMARY

According to the invention, an air supply device according to claim 1 is provided.

Different embodiments of the device, which are embodiments of the invention, will be discussed below.

In an embodiment of the device, the upper part and the lower part are arranged to be squeezed against each other in vertical direction when the bottom sheet is lifted.

The casing may be made of for example metal, plastic or wood so that it protects internal parts of the device.

The adjusting means for adjusting the vertical position of the bottom sheet may comprise a screw or screws which are tightened underneath the air supply device. Some of the tightening screws may be located at the back portion of the bottom sheet. Therefore, there may be difficulties to adjust these screws when the air supply device is installed inside a cabin or between cabins in a building. However, the screw(s) at the back portion of the bottom sheet may comprise an extra lever which extends from underneath the air supply device to the front side of the air supply device.

By lifting the bottom sheet, the lower part and the upper part are squeezed together and against the casing. Contacting surfaces between the lower part and the upper part are pushed together and contacting surfaces are deformed and, therefore, sealing the body more air tight. In an embodiment only the contacting surfaces of the upper part or the lower part are deformed. A sufficient deformation of the contacting surfaces is a squeeze of 0,1-3 mm of the elastic material at the contacting surfaces. The contacting surfaces between the body and the casing may be sealed together by regular seals (e.g. weather strip).

In an embodiment of the device, the upper part of the body is a wedge shape so that the upper part narrows upwards. The narrowing upper part is squeezed more together when the bottom sheet is lifted upwards.

In an embodiment of the device, the upper part is narrowed upwards so that the angle α between side walls of the upper part is 10° or less.

In an embodiment of the device, the upper part is narrowed upwards so that the angle α between side walls of the upper part is 5° or less.

In an embodiment of the device, the upper part is narrowed upwards so that the angle α between side walls of the upper part is 2° or less.

In an embodiment of the device, contacting surfaces between the upper part and the lower part comprises a tongue and groove joint. The tongue and the groove may be positioned on either of the upper part or the lower part but not so that both are positioned on the same part. However, it is possible that the other one of the upper part and the lower part comprises a tongue at the contacting surface and the other one has a flat contacting surface. The tongue may have a shape of triangle, square, rectangle, trapezoid etc. However, it is preferable that the shape of the tongue narrows while extending outward from the upper part of lower part. The groove on the opposite contacting surface (opposite the tongue) has corresponding shape in order to make a good contact, e.g. a triangular groove with a wide opening and a narrow end so as to fit a triangular tongue within the groove.

In an embodiment of the device, a heat transfer unit is arranged inside the lower part of the body and within the exhaust air channel and the supply air channel to transfer thermal energy between exhaust air flowing in the exhaust air channel, and supply air flowing in the supply air channel. By such arrangement the heat transfer unit may be fixed or replaced by removing the lower part only from the air supply device. Also the heat transfer unit may be installed inside the lower part before the lower part is brought to the installation plant.

In an embodiment of the device, the upper part comprises the air supply channel and a supply air fan inside the supply air channel for boosting the flow of the supply air into the room. By arranging the supply air fan in the upper part of the body and above the heat transfer unit, the casing of the air supply device may have smaller surface area.

In an embodiment of the device, the upper part of the body comprises the exhaust air channel and an exhaust air fan inside the exhaust air channel for boosting the flow of the exhaust air from the room. By arranging the exhaust air fan in the upper part of the body and above the heat transfer unit, the casing of the air supply device may have smaller surface area.

In an embodiment of the device, the upper part of the body comprises an exhaust air inlet and an exhaust air outlet, and a supply air inlet and a supply air outlet. The inlets and outlets are used to connect exhaust air and supply air ducts to the air supply device. Each of said inlets and outlets are made of the elastic material.

In an embodiment of the device, the upper part of the body comprises a cooker hood air channel connected to the exhaust air channel and having a closed cooker hood air inlet. The cooker hood air channel and the closed cooker hood air inlet are made of the elastic material. Air supply devices according to this embodiment are intended to be installed inside buildings which may have a separate cooker hood duct for extracting cooker hood exhaust air from the building. By default, the cooker hood inlet of the cooker hood air channel is closed. However, there is an option to cut it open if the building comprises a cooker hood duct which is to be connected to the air supply device for extracting the cooker hood air from the building.

In an embodiment of the device, the cooker hood air inlet for the cooker hood air channel is a continuous part of the body of the upper part.

In an embodiment of the device, the elastic material is expanded polypropylene (EPP). EPP has good thermal insulation properties and its elasticity is suitable for squeezing parts made of EPP together. It is also light material and, therefore, the weight of the body parts is lower than in air supply devices with metal parts. The elastic material of the body may also be expanded polystyrene (EPS) but EPP is more elastic and less brittle.

In an embodiment of the device, the heat transfer unit comprises a rotating heat transfer element.

In an embodiment of the device, the rotating heat transfer element rotates around horizontal axis.

In an embodiment of the device, the lower part of the body comprises at least one air filter inside an air channel. The air filter may be inside the exhaust air channel or it may be inside the supply air channel. An alternative is also to have separate air filters inside both of these air channels.

In an embodiment of the device, the lower part and the upper part are detachably squeezed against each other, wherein the lower part of the body is configured to loosen from the upper part of the body. Because the upper part and the lower part of the body are not fastened to each other by any fastening compound such as a sealing compound or glue, it is possible to detach these body parts from each other without causing any damages to the parts and/or their contacting surfaces.

In an embodiment of the device, the lower part of the body is configured to loosen from the upper part of the body when the bottom sheet is lowered.

In an embodiment of the device, the lower part and the upper part are pre-assembled modules. The upper part and the lower part may comprise different parts arranged inside the body. For example there may be a supply air fan, exhaust air fan, a cooker hood channel, heater, cooler, heat exchanger, filter, grill and/or electrical components inside the upper part. Inside the lower part, there is a heat exchanger unit and also there may be air filter or filters for cleaning the air that flows inside the device and through such filter of filters. The upper part and the lower part may be pre-assembled for example in a factory when manufacturing the air supply device in order to avoid having to assemble these parts when installing the air supply device in the building where it will be used. This way the person installing the air supply device only needs to install the upper part and the lower part into the casing of the air supply device and to connect the air supply device to a power supply.

In an embodiment of the device, the casing has the shape of a rectangular solid that has a rectangular front door via which the upper part and the lower part may be inserted and removed by sliding the upper part and/or lower part horizontally transversely to a front opening when the front door is open.

In an embodiment of the device, the upper part and the lower part are configured to be squeezed against each other with sufficient pressure to achieve a tightness in contact surfaces of the upper part and lower part so that the leakage air flow per surface area of the device in the contact surfaces is 0,27 x pₛ^{0,65} or lower, wherein pₛ is a test pressure.

Various aspects and embodiments of the air supply device described above may be used in any combination with each other as long as within the scope of the claims.

### BRIEF DESCRIPTION OF THE DRAWINGS

The accompanying drawings, which are included to provide a further understanding of the air supply device and which constitute a part of this specification, illustrate embodiments of the air supply device according to the invention and together with the description help to explain the principles of the invention. In the drawings:
**Fig. 1** shows an exploded view of an air supply device according to a first embodiment,
**Fig. 2** shows the external casing of the air supply device of Fig. 1,
**Fig. 3** is a cross sectional front view of the air supply device prior to lifting its bottom sheet thus squeezing its lower part and upper part together,
**Fig. 4** is a cross sectional front view of the air supply device with its bottom sheet lifted and the lower part and the upper part of a body thus being squeezed together, and
**Fig. 5** shows a detailed view of the contact surfaces of the upper part and the lower part when they are not (A) squeezed together and when they are (B).

### DETAILED DESCRIPTION

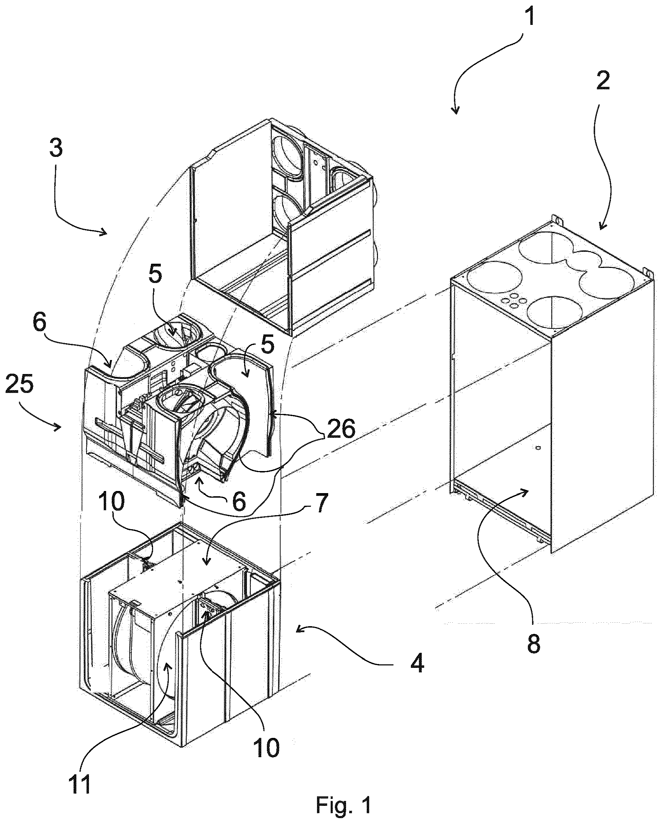

Figure 1 shows an air supply device 1 having components ready to be assembled together. The air supply unit comprises a casing 2 further comprising a separate bottom sheet 8. Inside the casing 2, the air supply device 1 comprises a body which comprises two parts, an upper part 3 and a lower part 4 where the body and thus both of the upper part 3 and the lower part 4 are made of elastic material. The body further comprises an exhaust air channel 5 and a supply air channel 6. The exhaust air channel 5 is arranged to receive exhaust air from a room into the air supply device and conduct the exhaust air out of the air supply device and further out of the building, and the supply air channel is arranged to receive fresh supply air into the air supply device and conduct the supply air further out of the air supply device into the room. The exhaust air channel 5 and the supply air channel 6 run inside the air supply device 1 in parallel and forms a shape of U so that the each exhaust air channel 5 and the supply air channel 6 comprise two vertical portions and a horizontal portion between the vertical portions. The exhaust air and the supply air inside the respective channels flow in opposite directions.

According to one embodiment, the air supply device comprises a heat transfer unit 7 within the exhaust air channel 5 and the supply air channel 6, which heat transfer unit 7 transfers thermal energy between the exhaust air and the supply air before the exhaust air is blown out of the building and the supply air into the room.

According to one embodiment, the heat transfer unit comprises a rotating heat transfer element 11.

According to one embodiment, the rotating heat transfer element 11 is arranged to rotate in vertical position around a horizontal axis and to transfer thermal energy from one air flow into the other.

According to one embodiment, the rotating heat transfer element 11 is arranged to rotate in horizontal position around a vertical axis and to transfer thermal energy from one air flow into the other.

According to one embodiment, the heat transfer unit 7 is arranged within the horizontal portions of the exhaust air channel 5 and the supply air channel 6.

According to one embodiment, the heat transfer unit 7 comprises vertical dividing elements 10 to separate the exhaust air channel 5 and the supply air channel 6 from each other.

According to one embodiment, the heat transfer unit 7 comprises horizontal dividing elements to divide the exhaust air channel 5 and the supply air channel 6 from each other.

According to one embodiment, the dividing elements 10 are removable elements, which may be removed and installed again.

According to one embodiment, the casing 2 is made of metal, plastic or wood.

As illustrated in figure 1, the upper part 3 (with all the components inside) is installed on top of the lower part 4. Thereafter the body with the upper and lower part on top of each other is installed inside the casing 2 e.g. by sliding the body into the casing 2 through a front door opening of the casing 2. Alternatively the lower part 4 is slid into the casing 2 first and the upper part 3 is thereafter carefully slid onto the lower part 4.

According to one embodiment, the upper part 3 comprises a separate inner part 25, which is made of the same elastic material as the body. The inner part 25 forms the exhaust air channel 5 and the supply air channel 6 inside the upper part.

According to one embodiment, the inner part 25 comprises vertical sealing surfaces 26 which seal the inner part 25 against side walls of the upper part 3. The vertical sealing surfaces 26 may comprise seals e.g. weather stripes.

In figure 1, the heat transfer unit comprises the rotating heat transfer element 11. The lower part 4 comprises dividing elements 10, which separate the exhaust air channel and the supply air channel inside the lower part 4 so that the supply air flow and the exhaust air flow do not mix.

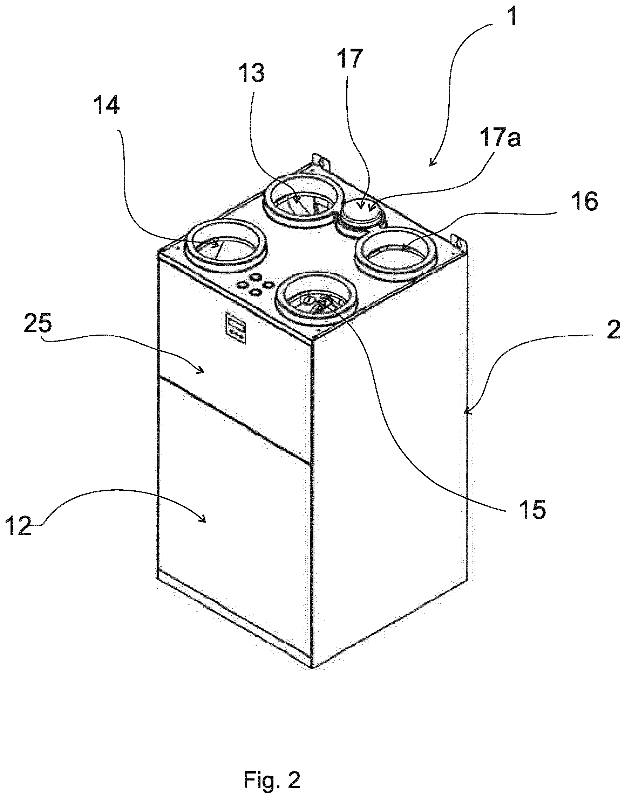

Figure 2 shows an air supply device 1 seen from outside its casing 2. In figure 2, the casing 2 comprises a wall 25 comprising a hatch or front door 12, which may be opened for maintenance. The upper end of the air supply device 1 comprises a supply air outlet 13, an exhaust air inlet 14, an exhaust air outlet 15 and a supply air inlet 16. The order of the inlets and outlets may differ in some embodiments. For example the supply air inlet 16 and outlet 13 may be closer to the wall 25 comprising the front door 12, and the exhaust air inlet 14 and outlet 15 may be farther from the wall comprising the front door 12.

In figure 2, the air supply device 1 comprises a cooker hood air inlet 17 for cooker hood exhaust air. The cooker hood air inlet 17, in figure 2, is made of same material as the body. By default, as in figure 2, the cooker hood air inlet 17 is closed with a cap 17a that is integral with the body when manufacturing the body. The cooker hood air inlet 17 may be opened at the installation site if the building comprises a duct for cooker hood exhaust air and the air supply device 1 is to be connected to it. This may be done by sawing the cap 17a with a saw or cutting the cap 17a with a knife. The elastic material, such as EPP, can easily be cut or sawed and thus removing the cap 17a can be done rather quickly.

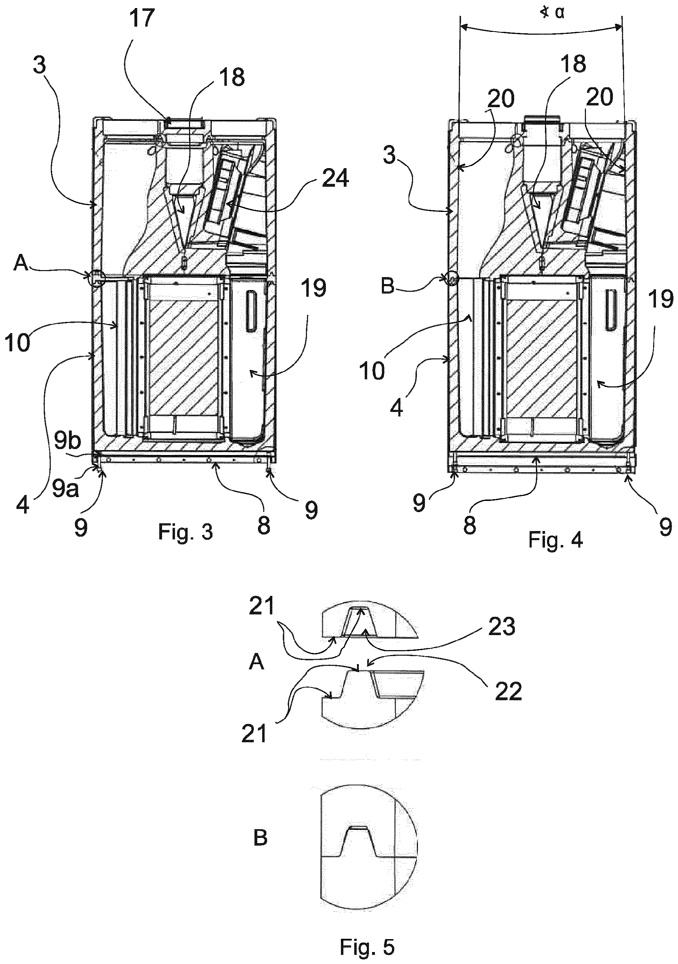

Figures 3 and 4 show a cross sectional front view of the air supply device. In figure 3, the bottom sheet 8 is in its lowest position and the lower part 4 and the upper part 3 are in a resting position, wherein no pressure is yet affected on them. The lower part 4 and the upper part 5 may even have a little gap between them, as seen in figure 3. In figure 4, the bottom sheet 8 is lifted and the lower part 4 and the upper part 3 of the body are squeezed together, and against the casing to bring them into an installed position. In the installed position, it is possible to keep leakage air level out of the device lower.

According to one embodiment, the upper part 3 and the lower part 4 are arranged to be squeezed against each other in vertical direction when the bottom sheet 8 is lifted.

According to one embodiment, the upper part 3 and the lower part 4 are configured to be squeezed against each other with sufficient pressure to achieve a tightness in contact surfaces of the upper part and lower part so that the leakage air flow per surface area of the device in the contact surfaces is 0,27 x pₛ^{0,65} or lower, wherein pₛ is a test pressure.

Figures 3 and 4 show also a cooker hood exhaust air channel 18, arranged inside the upper part 3, which connects the cooker hood air inlet 17 to the exhaust air channel 5.

The lower part 4 comprises an air filter 19 for removing impurities or some unwanted particles from the flowing air.

According to one embodiment, the air filter 19 is located inside the exhaust air channel 5 or the supply air channel 6.

According to one embodiment, both of the exhaust air channel and the supply air channel have an air filter 19 inside.

The adjusting means 9 for adjusting the vertical position of the bottom sheet 8 are seen in at the bottom of the air supply device 1. In figures 3 and 4 the adjusting means 9 are illustrated by a bolt 9a and nut 9b but may as well be screws with nuts 9b, or instead of nuts corresponding internal threads in the casing 2, which are tightened (see figure 4) for lifting the bottom sheet 8, and untightened (see figure 3) for lowering the bottom sheet 8.

According to one embodiment, the bottom sheet comprises tightening screws, as adjusting means 9, on every corner of the square or rectangular shaped bottom sheet 8. Thus, some of the screws pass through the bottom sheet 8 close to the back wall (on opposite side of the hatch or front door 12 of the air supply device) and, therefore, there may be difficulties to adjust these screws when the air supply device is in its position for use e.g. between cabinets of inside a cabinet in the building. The adjusting means 9 may, however, comprise extra lever or levers connected to these screws, located at the back portion of the bottom sheet 8, which lever extends from underneath the air supply device 1 to the front side of the air supply device 1. This lever is used to adjust the screws at the back portion of the bottom sheet 8.

As seen in figure 4, the upper part 3 is wedge shaped so that it narrows upwards. An angle α between inner sides of side walls 20 is 10° or smaller.

According to one embodiment the angle α between inner sides of side walls 20 is between 5° or smaller.

According to one embodiment the angle α between inner sides of side walls 20 is between 2° or smaller.

To boost the air flowing in the air channels, the supply air channel 6 or the exhaust air channel may comprise a fan 24. The fan in the supply air channel is a supply air fan and the fan inside the exhaust air channel is an exhaust air fan.

According to one embodiment, both of the supply air channel and the exhaust air channel comprises fans 24.

Figure 5 shows detailed view of sections A and B (see figures 3 and 4. In section A, the upper part 3 and the lower part 4 are in the resting position and no pressure is yet affected on them, and contacting surfaces 21 of the upper part 3 and the lower part 4 do not touch each other. In section B, the upper part 3 and the lower part 4 are in the installed position, and the contacting surfaces 21 of the upper part 3 and the lower part 4 are tightly pushed together. When squeezing together, the contacting surfaces 21 are deformed.

According to one embodiment, only the contacting surface 21 of the upper part 3 or the lower part 4 is deformed when they are squeezed together.

According to one embodiment, the contacting surfaces 21 of the upper part 3 and/or the lower part 4 are squeezed together so as to cause a 0,1-3 mm deformation of the contacting surfaces.

Figures 3-5 show the contacting surface 21 of the lower part 4 and the upper part 3 comprising a tongue and groove joint so that the upper part 3 comprises a groove 23 and the lower part comprises tongue 22.

According to one embodiment, the contacting surface 21 of the upper part 3 comprises tongue and the lower part comprises groove.

According to one embodiment, the contacting surface 21 of one of the lower part 4 or the upper part 3 comprises tongue and the contacting surface 21 of the other one of these parts is flat.

According to one embodiment, the contacting surface 21 of both the upper part 3 and the lower part 4 comprises a tongue.

In figures 3-5, the cross-sectional shape of tongue 22 is trapezoidal and the groove has corresponding shape. However, according to other embodiments, the tongue 22 may a shape of a triangle, a square, a rectangle etc. and the grooves of same embodiments have corresponding shape.

Although the air supply device has been described in conjunction with the above embodiments, it should be understood that the air supply device is not limited to any particular embodiment of the above described embodiments. While the air supply device have been described in connection with a number of exemplary embodiments, and implementations, various modifications, and equivalent arrangements may be made as long as they fall within the scope of the claims.

## Claims

1. An air supply device (1) for extracting exhaust air from a room and leading fresh supply air into the room comprising
- a casing (2), forming an outer layer of the air supply device (1),
- a body, made of elastic material, arranged inside the casing (2), wherein the body is divided in at least an upper part (3) and a lower part (4) which are arranged on top of each other,
- an exhaust air channel (5) arranged inside the body for extracting the exhaust air from the room, and
- a supply air channel (6) arranged inside the body for leading the supply air into the room, wherein
- the air supply device (1) further comprises adjusting means (9), **characterized in that**
- the upper part (3) and the lower part (4) of the body are arranged to be squeezed against each other and the casing (2) by the adjusting means (9), whereby the supply air channel (6) and the exhaust air channel (5) are sealed,
- the casing (2) comprises a separate bottom sheet (8), and
wherein the adjusting means (9) are arranged to adjust the vertical position of the bottom sheet (8), wherein the bottom sheet (8) arranged to squeeze the upper part (3) and the lower part(4) against each other and the casing (2) when the bottom sheet (8) is lifted.

2. An air supply device according to claim 1,
**characterized in that** the upper part (3) of the body is wedge shaped so that the upper part (3) narrows upwards.

3. An air supply device according to any of the preceding claims,
**characterized in that** contacting surfaces (21) between the upper part (3) and the lower part (4) comprises a tongue (22) and groove (23) joint.

4. An air supply device according to any of the preceding claims,
**characterized in that** a heat transfer unit (7) is arranged inside the lower part (4) of the body, and within the exhaust air channel (5) and the supply air channel (6) to transfer thermal energy between exhaust air flowing in the exhaust air channel, and supply air flowing in the supply air channel.

5. An air supply device according to any of the preceding claims,
**characterized in that** the upper part (3) comprises the supply air channel and a supply air fan inside the supply air channel (6) for boosting the flow of the supply air into the room.

6. An air supply device according to any of the preceding claims,
**characterized in that** the upper part (3) of the body comprises the exhaust air channel and an exhaust air fan inside the exhaust air channel (5) for boosting the flow of the exhaust air from the room.

7. An air supply device according to any of the preceding claims,
**characterized in that** the upper part of the body comprises an exhaust air inlet (14) and an exhaust air outlet (15), and a supply air inlet (16) and a supply air outlet (13) for the supply air, wherein each inlet and outlet is made of the elastic material.

8. An air supply device according to any of the preceding claims,
**characterized in that** the upper part (3) of the body comprises a cooker hood air channel (18) connected to the exhaust air channel (5) and having a closed cooker hood air inlet (17), wherein the cooker hood channel (18) and the closed cooker hood air inlet (17) are made of the elastic material.

9. An air supply device according to claim 8,
**characterized in that** the cooker hood air inlet (17) of the cooker hood air channel (18) is continuous part of the body.

10. An air supply device according to any of the preceding claims,
**characterized in that** the elastic material is expanded polypropylene.

11. An air supply device according to claim 4 or any of claims 5-10 when depending on claim 4,
**characterized in that** the heat transfer unit (7) comprises a rotating heat transfer element (11).

12. An air supply device according to any of the preceding claims,
**characterized in that** the lower part (4) of the body comprises at least one air filter (19) inside an air channel.

13. An air supply device according to any of the preceding claims,
**characterized in that** the lower part (4) and the upper part (3) are detachably squeezed against each other, wherein the lower part (4) of the body is configured to loosen from the upper part (3) of the body.

14. An air supply device according to any of the preceding claims,
**characterized in that** the casing (2) has the shape of a rectangular solid that has a rectangular front door (12) via which the upper part (3) and the lower part (4) may be inserted and removed by sliding the upper part (3) and/or lower part (4) horizontally transversely to a front opening when the front door (12) is open.

15. An air supply device according to any of the preceding claims,
**characterized in that** the upper part (3) and the lower part (4) are configured to be squeezed against each other with sufficient pressure to achieve a tightness in contact surfaces of the upper part and lower part so that the leakage air flow per surface area of the device in the contact surfaces is 0,27 x pₛ^{0,65} or lower, wherein pₛ is a test pressure.

## Patentansprüche

1. Luftzufuhrvorrichtung (1) zum Absaugen von Abluft aus einem Raum und zum Einleiten von frischer Zuluft in den Raum, bestehend aus
- ein Gehäuse (2), das eine Außenschicht der Luftzufuhrvorrichtung (1) bildet,
- einen Körper aus elastischem Material, der im Inneren des Gehäuses (2) angeordnet ist, wobei der Körper in mindestens einen oberen Teil (3) und einen unteren Teil (4) unterteilt ist, die übereinander angeordnet sind,
- einem im Inneren des Gehäuses angeordneten Abluftkanal (5) zum Absaugen der Abluft aus dem Raum, und
- einem im Inneren des Gehäuses angeordneten Zuluftkanal (6) zur Führung der Zuluft in den Raum, wobei
- die Luftzufuhrvorrichtung (1) umfasst außerdem Einstellmittel (9),
**dadurch gekennzeichnet, dass**
- der obere Teil (3) und der untere Teil (4) des Gehäuses so angeordnet sind, dass sie durch die Einstellmittel (9) gegeneinander und gegen das Gehäuse (2) gepresst werden, wodurch der Zuluftkanal (6) und der Abluftkanal (5) abgedichtet werden ,
- das Gehäuse (2) eine separate Bodenplatte (8) umfasst, und wobei die Einstellmittel (9) so angeordnet sind, dass sie die vertikale Position der Bodenplatte (8) einstellen, wobei die Bodenplatte (8) so angeordnet ist, dass sie den oberen Teil (3) und den unteren Teil (4) gegeneinander und das Gehäuse (2) drückt, wenn die Bodenplatte (8) angehoben wird.

2. Luftzufuhrvorrichtung nach Anspruch 1, **dadurch gekennzeichnet, dass** der obere Teil (3) des Körpers keilförmig ist, so dass sich der obere Teil (3) nach oben hin verengt.

3. Luftzufuhrvorrichtung nach einem der vorhergehenden Ansprüche, **dadurch gekennzeichnet, dass** die Kontaktflächen (21) zwischen dem oberen Teil (3) und dem unteren Teil (4) eine Nut- (22) und Federverbindung (23) aufweisen.

4. Luftzufuhrvorrichtung nach einem der vorhergehenden Ansprüche, **dadurch gekennzeichnet, dass** eine Wärmeübertragungseinheit (7) innerhalb des unteren Teils (4) des Gehäuses und innerhalb des Abluftkanals (5) und des Zuluftkanals (6) angeordnet ist, um Wärmeenergie zwischen der im Abluftkanal strömenden Abluft und der im Zuluftkanal strömenden Zuluft zu übertragen.

5. Luftzufuhrvorrichtung nach einem der vorhergehenden Ansprüche, **dadurch gekennzeichnet, dass** das Oberteil (3) den Zuluftkanal und ein Zuluftgebläse innerhalb des Zuluftkanals (6) zur Verstärkung des Zuluftstroms in den Raum umfasst.

6. Luftzufuhrvorrichtung nach einem der vorhergehenden Ansprüche, **dadurch gekennzeichnet, dass** der obere Teil (3) des Gehäuses den Abluftkanal und ein Abluftgebläse innerhalb des Abluftkanals (5) zur Verstärkung des Abluftstroms aus dem Raum umfasst.

7. Luftzufuhrvorrichtung nach einem der vorhergehenden Ansprüche, **dadurch gekennzeichnet, dass** der obere Teil des Körpers einen Ablufteinlass (14) und einen Abluftauslass (15) sowie einen Zulufteinlass (16) und einen Zuluftauslass (13) für die Zuluft aufweist, wobei jeder Einlass und jeder Auslass aus dem elastischen Material hergestellt ist.

8. Luftzufuhrvorrichtung nach einem der vorhergehenden Ansprüche, **dadurch gekennzeichnet, dass** der obere Teil (3) des Körpers einen Dunstabzugshauben-Luftkanal (18) umfasst, der mit dem Abluftkanal (5) verbunden ist und einen geschlossenen Dunstabzugshauben-Lufteinlass (17) aufweist, wobei der Dunstabzugshauben-Kanal (18) und der geschlossene Dunstabzugshauben-Lufteinlass (17) aus dem elastischen Material hergestellt sind.

9. Luftzufuhrvorrichtung nach Anspruch 8, **dadurch gekennzeichnet, dass** der Dunstabzugshaubenlufteinlass (17) des Dunstabzugshaubenluftkanals (18) ein durchgehender Teil des Körpers ist.

10. Luftzufuhrvorrichtung nach einem der vorhergehenden Ansprüche, **dadurch gekennzeichnet, dass** das elastische Material expandiertes Polypropylen ist.

11. Luftzufuhrvorrichtung nach Anspruch 4 oder einem der Ansprüche 5-10 in Abhängigkeit von Anspruch 4, **dadurch gekennzeichnet, dass** die Wärmeübertragungseinheit (7) ein rotierendes Wärmeübertragungselement (11) umfasst.

12. Luftzufuhrvorrichtung nach einem der vorhergehenden Ansprüche, **dadurch gekennzeichnet, dass** der untere Teil (4) des Körpers mindestens einen Luftfilter (19) innerhalb eines Luftkanals aufweist.

13. Luftzufuhrvorrichtung nach einem der vorhergehenden Ansprüche, **dadurch gekennzeichnet, dass** der untere Teil (4) und der obere Teil (3) lösbar gegeneinander gepresst sind, wobei der untere Teil (4) des Körpers so konfiguriert ist, dass er sich vom oberen Teil (3) des Körpers löst.

14. Luftzufuhrvorrichtung nach einem der vorhergehenden Ansprüche, **dadurch gekennzeichnet, dass** das Gehäuse (2) die Form eines rechteckigen Körpers hat, der eine rechteckige Fronttür (12) aufweist, durch die das Oberteil (3) und das Unterteil (4) eingesetzt und entnommen werden können, indem das Oberteil (3) und/oder das Unterteil (4) bei geöffneter Fronttür (12) horizontal quer zu einer Frontöffnung verschoben wird.

15. Luftzuführungsvorrichtung nach einem der vorhergehenden Ansprüche, **dadurch gekennzeichnet, dass** der obere Teil (3) und der untere Teil (4) so konfiguriert sind, dass sie mit ausreichendem Druck gegeneinander gepresst werden, um eine Dichtheit in den Kontaktflächen des oberen Teils und des unteren Teils zu erreichen, so dass der Leckluftstrom pro Oberfläche der Vorrichtung in den Kontaktflächen 0,27 X _{ps0'}⁶⁵ oder weniger beträgt, wobei ₚₛ ein Prüfdruck ist.

## Revendications

1. Dispositif d'alimentation en air (1) pour extraire de l'air d'évacuation d'une pièce et amener de l'air d'alimentation frais dans la pièce comprenant
- une enveloppe (2), formant une couche extérieure du dispositif d'alimentation en air (1),
- un corps, constitué d'un matériau élastique, disposé à l'intérieur de l'enveloppe (2), le corps étant divisé en au moins une partie supérieure (3) et une partie inférieure (4) qui sont disposées l'une au-dessus de l'autre,
- un canal d'air d'évacuation (5) agencé à l'intérieur du corps pour extraire l'air d'évacuation de la pièce, et
- un canal d'air d'alimentation (6) disposé à l'intérieur du corps pour amener l'air d'alimentation dans la pièce,
dans lequel
- le dispositif d'alimentation en air (1) comprend en outre des moyens d'ajustement (9),
**caractérisé en ce que**
- la partie supérieure (3) et la partie inférieure (4) du corps sont agencées pour être pressées l'une contre l'autre et contre l'enveloppe (2) par les moyens d'ajustement (9), de sorte que le canal d'air d'alimentation (6) et le canal d'air d'évacuation (5) sont scellés,
- l'enveloppe (2) comprend une feuille inférieure séparée (8), et
dans lequel les moyens d'ajustement (9) sont agencés pour ajuster la position verticale de la feuille inférieure (8), dans lequel la feuille inférieure (8) est agencée pour presser la partie supérieure (3) et la partie inférieure (4) l'une contre l'autre et contre l'enveloppe (2) lorsque la feuille inférieure (8) est soulevée.

2. Dispositif d'alimentation en air selon la revendication 1,
**caractérisé en ce que** la partie supérieure (3) du corps est en forme de coin de sorte que la partie supérieure (3) se rétrécit vers le haut.

3. Dispositif d'alimentation en air selon l'une quelconque des revendications précédentes,
**caractérisé en ce que** des surfaces de contact (21) entre la partie supérieure (3) et la partie inférieure (4) comportent une jonction à languette (22) et rainure (23).

4. Dispositif d'alimentation en air selon l'une quelconque des revendications précédentes,
**caractérisé en ce qu'**une unité de transfert de chaleur (7) est agencée à l'intérieur de la partie inférieure (4) du corps, et au sein du canal d'air d'évacuation (5) et du canal d'air d'alimentation (6) pour transférer de l'énergie thermique entre l'air d'évacuation circulant dans le canal d'air d'évacuation, et l'air d'alimentation circulant dans le canal d'air d'alimentation.

5. Dispositif d'alimentation en air selon l'une quelconque des revendications précédentes,
**caractérisé en ce que** la partie supérieure (3) comprend le canal d'air d'alimentation et un ventilateur d'air d'alimentation à l'intérieur du canal d'air d'alimentation (6) pour augmenter le débit de l'air d'alimentation dans la pièce.

6. Dispositif d'alimentation en air selon l'une quelconque des revendications précédentes,
**caractérisé en ce que** la partie supérieure (3) du corps comprend le canal d'air d'évacuation et un ventilateur d'air d'évacuation à l'intérieur du canal d'air d'évacuation (5) pour augmenter le débit de l'air d'évacuation depuis la pièce.

7. Dispositif d'alimentation en air selon l'une quelconque des revendications précédentes,
**caractérisé en ce que** la partie supérieure du corps comprend une entrée d'air d'évacuation (14) et une sortie d'air d'évacuation (15), et une entrée d'air d'alimentation (16) et une sortie d'air d'alimentation (13) pour l'air d'alimentation, dans lequel chaque entrée et sortie est constituée du matériau élastique.

8. Dispositif d'alimentation en air selon l'une quelconque des revendications précédentes,
**caractérisé en ce que** la partie supérieure (3) du corps comprend un canal d'air de hotte aspirante (18) relié au canal d'air d'évacuation (5) et ayant une entrée d'air de hotte aspirante fermée (17), dans lequel le canal de hotte aspirante (18) et l'entrée d'air de hotte aspirante fermée (17) sont constitués du matériau élastique.

9. Dispositif d'alimentation en air selon la revendication 8,
**caractérisé en ce que** l'entrée d'air de hotte aspirante (17) du canal d'air de hotte aspirante (18) constitue une partie continue du corps.

10. Dispositif d'alimentation en air selon l'une quelconque des revendications précédentes,
**caractérisé en ce que** le matériau élastique est du polypropylène expansé.

11. Dispositif d'alimentation en air selon la revendication 4 ou l'une quelconque des revendications 5 à 10 lorsqu'elles dépendent de la revendication 4,
**caractérisé en ce que** l'unité de transfert de chaleur (7) comprend un élément de transfert de chaleur rotatif (11) .

12. Dispositif d'alimentation en air selon l'une quelconque des revendications précédentes,
**caractérisé en ce que** la partie inférieure (4) du corps comprend au moins un filtre à air (19) à l'intérieur d'un canal d'air.

13. Dispositif d'alimentation en air selon l'une quelconque des revendications précédentes,
**caractérisé en ce que** la partie inférieure (4) et la partie supérieure (3) sont pressées l'une contre l'autre de manière amovible, la partie inférieure (4) du corps étant configurée pour se détacher de la partie supérieure (3) du corps.

14. Dispositif d'alimentation en air selon l'une quelconque des revendications précédentes,
**caractérisé en ce que** l'enveloppe (2) a la forme d'un solide rectangulaire qui présente une porte frontale rectangulaire (12) par laquelle la partie supérieure (3) et la partie inférieure (4) peuvent être insérées et retirées en faisant glisser la partie supérieure (3) et/ou la partie inférieure (4) horizontalement de manière transversale à une ouverture frontale lorsque la porte frontale (12) est ouverte.

15. Dispositif d'alimentation en air selon l'une quelconque des revendications précédentes,
**caractérisé en ce que** la partie supérieure (3) et la partie inférieure (4) sont configurées pour être pressées l'une contre l'autre avec une pression suffisante pour obtenir une étanchéité dans des surfaces de contact de la partie supérieure et de la partie inférieure de sorte que le débit d'air de fuite par surface superficielle du dispositif dans les surfaces de contact est de 0,27 x pₛ^{0,65} ou moins, où pₛ est une pression d'essai.
